Europäisches Patentamt

European Patent Office

Office européen des brevets

(11) Numéro de publication: **0 331 663**
**A2**

# (12) DEMANDE DE BREVET EUROPEEN

(21) Numéro de dépôt: **89870031.5**

(22) Date de dépôt: **22.02.89**

(51) Int. Cl.⁴: **G 11 B 17/028**
**G 11 B 17/04**

(30) Priorité: **02.03.88 BE 8800239**

(43) Date de publication de la demande:
**06.09.89 Bulletin 89/36**

(84) Etats contractants désignés:
**DE ES FR GB IT NL**

(71) Demandeur: **STAAR SOCIETE ANONYME**
**Chaussée de Roodebeek, 137-143**
**B-1200 Bruxelles (BE)**

(72) Inventeur: **d'Alayer de Costemore d'Arc, Stéphane Marie**
**André**
**rue Emile François, 12A**
**B-1474 Ways (BE)**

**Agostini, Louis Pierre César**
**Rue G. Wittouck, 26**
**B-1600 Leeuw St. Pierre (BE)**

(74) Mandataire: **Overath, Philippe et al**
**Cabinet Bede 13, Avenue Antoine Depage**
**B-1050 Bruxelles (BE)**

(54) Mécanisme de centrage automatique de disques.

㉚ Le mécanisme comprend au moins trois points mobiles (12) coopérant avec la périphérie du disque (8), les points (12) sont maintenus et guidés par une plaque de support (10) et liés à une pièce mobile (30) par rapport à la plaque (10).

Le déplacement de cette pièce mobile (30) assure un mouvement coordonné progressif desdits points (12) entre une position intérieure, correspondant à un diamètre de disque minimum, et une position extérieure, correspondant à un diamètre de disque maximum.

L'invention peut être appliquée aux dispositifs de chargement de disques dans des tourne-disques.

FIG. 1

EP 0 331 663 A2

**Description**

## Mécanisme de centrage automatique de disques

La présente invention se rapporte aux dispositifs de chargement de tourne-disques assurant le passage d'un disque de sa position de chargement ou d'éjection à sa position opérative et vice versa et concerne plus particulièrement un mécanisme assurant automatiquement le centrage de disques de diamètres différents présentés par l'utilisateur dans le dispositif de chargement.

De tels dispositifs ont déjà été proposés et notamment par la demanderesse, tels ceux couverts par les brevets et demandes de brevets belges n° 892.952, 8700386 et 8800058.

Le premier document concerne un dispositif dans lequel une liaison, en croix, entre leviers et butées situés de part et d'autre de la ligne de symétrie du support assure un déplacement coordonné des points de contact avec le disque, deux par deux. Si ce système offre une grande sécurité, il nécessite notamment la présence de surfaces importantes pour le guidage et le maintien des leviers et donc la présence d'un boîtier ou d'un support dans ou sur lequel le disque est positionné. La présence même de ce support ne permet pas de réduire les dimensions de l'ensemble comme cela est souhaitable pour les appareils portatifs ou destinés à être montés dans des véhicules et son utilisation pour de telles applications est donc excessivement restreinte.

Les deux autres documents décrivent des mécanismes nécessitant une liaison entre des éléments fixes et mobiles pour le fonctionnement de l'ensemble, ce qui est particulièrement adapté aux systèmes de chargement par tiroirs ou porte pivotante, mais à nouveau peu approprié à des appareils compacts ou portatifs dont l'encombrement doit être aussi réduit que possible et pour lesquels il est impératif que toute la mécanique ne soit située que d'un seul côté par rapport à la surface du disque (soit au-dessus soit en dessous) de façon à laisser le maximum d'espace disponible pour adapter n'importe quel dispositif d'entraînement et de lecture du disque.

Un second but de l'invention est que le fonctionnement du mécanisme de centrage soit simple et fiable.

Un troisième but de l'invention est que ledit mécanisme soit autonome et dépende d'un seul support de façon à pouvoir être facilement installé dans le plus grand nombre possible d'appareils.

En vue de la réalisation de ces buts, le mécanisme objet de l'invention est essentiellement caractérisé par les revendications 1 à 10.

Afin de mieux faire comprendre l'invention on en décrira des exemples de réalisation à l'aide des dessins annexés dans lesquels :

Fig 1 : est une vue schématique en perspective montrant le principe de fonctionnement d'un mécanisme selon l'invention.

Fig 2 : est une vue de détail montrant les organes essentiels du mécanisme.

Fig 3A et 3B sont respectivement des vues en élévation et en plan d'une variante de réalisation, du mécanisme selon l'invention représentant le centrage d'un disque de petit diamètre.

Fig 4A et 4B sont des vues correspondant aux Fig.3A et 3B représentant le centrage d'un disque de grand diamètre.

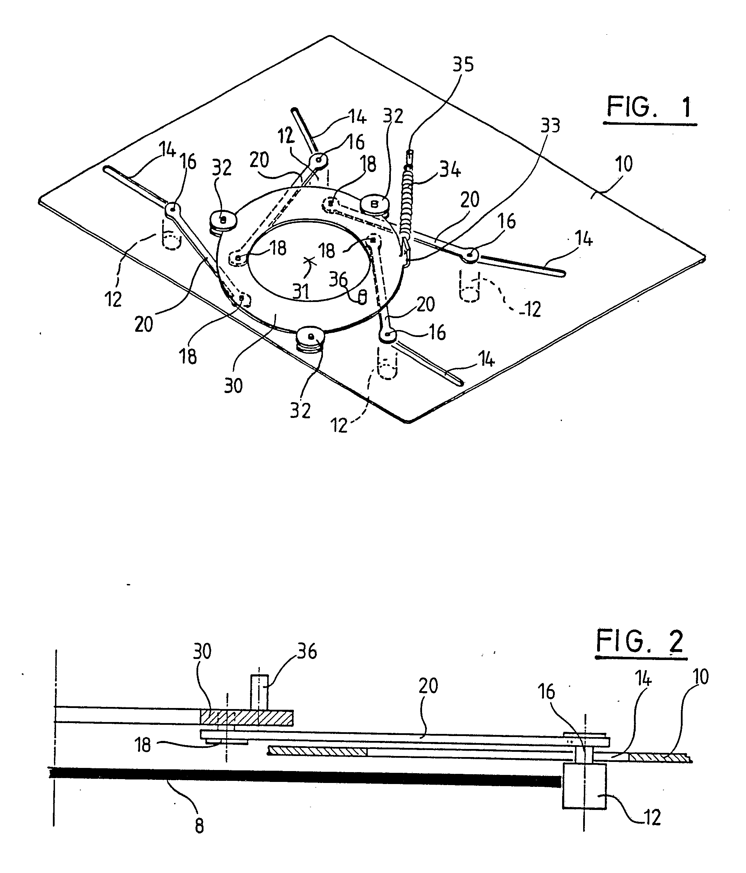

Comme montré sur les figures 1 et 2 le mécanisme comprend essentiellement une plaque de support 10 et au moins trois points mobiles qui dans le cas représenté sont constitués de quatre tenons (12) destinés à coopérer avec la périphérie d'un disque 8.

Le déplacement des tenons 12 entre une position intérieure, correspondant à un diamètre de disque minimum et une position extérieure, correspondant à un diamètre de disque maximum, est guidé par des rainures 14 pratiquées dans la plaque 10 et au travers desquelles passent des axes 16 solidaires des tenons 12. Conformément à l'invention ce déplacement des tenons 12 est coordonné à l'aide de biellettes 20 reliant chaque tenon 12 à une pièce mobile unique 30 pouvant subir une rotation limitée par rapport à la plaque de support 10.

Cette rotation limitée de la pièce 30 peut être guidée par des galets 32 fixés sur la plaque 10.

Des moyens élastiques, en l'occurrence un ressort 34, peuvent agir soit sur la pièce mobile 30 soit sur un ou plusieurs tenons 12 pour maintenir de façon permanente les tenons 12 dans une position intérieure (diamètre minimum).

La pièce mobile 30 est également munie d'une saillie 36 pouvant coopérer avec n'importe quel organe de l'appareil tourne-disque de manière à faire subir une rotation complémentaire à la pièce mobile 30 et de dégager les tenons 12 de la périphérie du disque 8 en position opérative de lecture.

Cette saillie 36 peut également être actionnée par un organe prévu dans le dispositif de chargement du disque de manière à amener les tenons 12 dans une position extérieure (diamètre maximum) par exemple dans le cas d'un dispositif de chargement à tiroir.

Comme on peut le comprendre le mécanisme de centrage objet de l'invention peut être incorporé dans n'importe quel dispositif de chargement de disque grâce à sa compacité et à sa simplicité de conception.

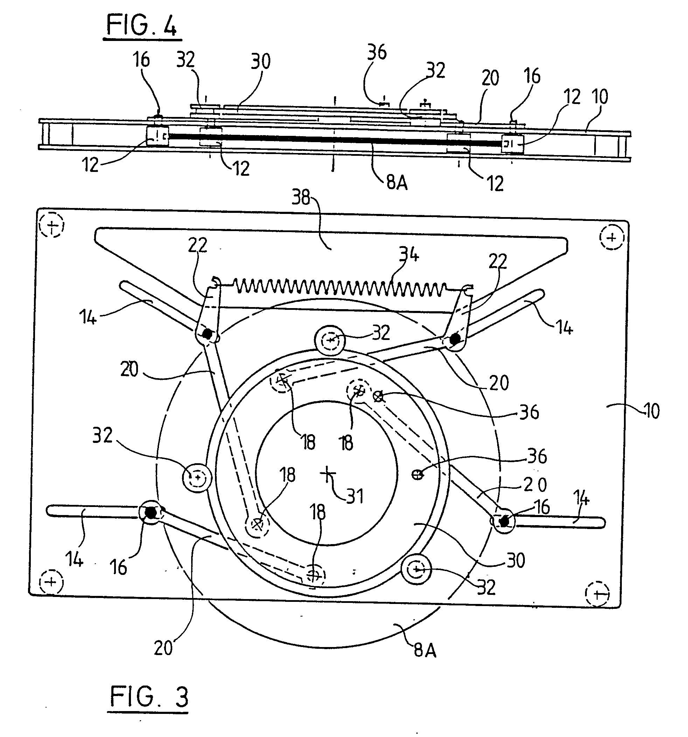

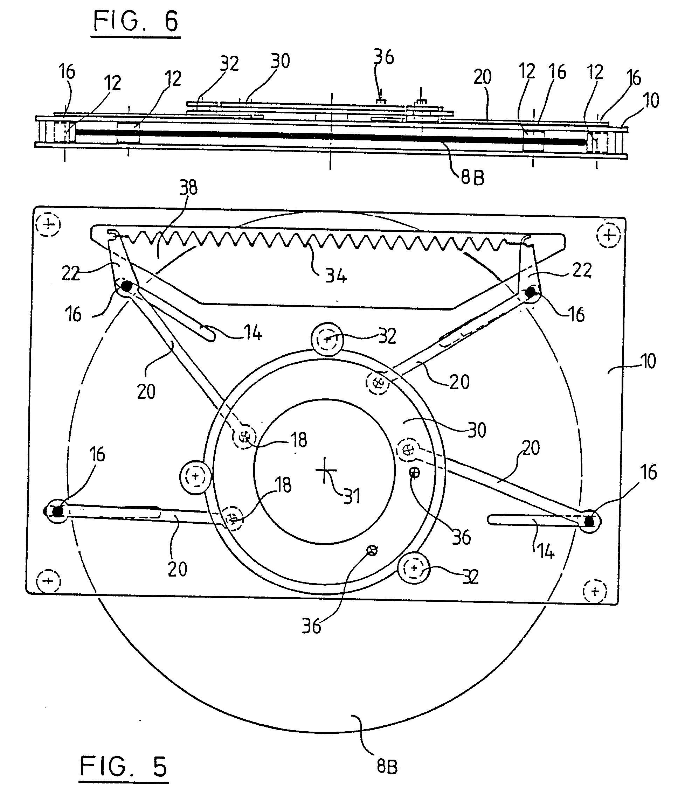

Les figures 3A, 3B et 4A, 4B montrent des vues en élévation (3A,4A) et des vues en plan (3B,4B) du mécanisme selon l'invention positionné respectivement pour un disque de petit diamètre 8A et un disque de grand diamètre 8B.

Dans cette réalisation, le mécanisme est adapté pour un appareil lecteur de disque muni d'un dispositif de chargement à fente d'introduction.

Comme on peut le voir sur les figures 3B et 4B les moyens élastiques sont constitués par un ressort 34 reliant deux bras 22 portés par deux biellettes 20.

Bien entendu, d'autres réalisations sont encore possibles sans sortir pour autant du cadre de la présente invention.

**Revendications**

1. Mécanisme permettant le centrage automatique de disques de diamètres différents dans un dispositif de chargement de tourne-disques, comprenant au moins trois points mobiles (12) coopérant avec la périphérie du disque (8) caractérisé en ce que les points (12) sont maintenus et guidés par une plaque de support (10) et en ce que les points (12) sont liés à une pièce mobile (30) par rapport à ladite plaque (10) et dont le déplacement assure un mouvement coordonné progressif desdits points (12) entre une position intérieure, correspondant à un diamètre de disque minimum, et une position extérieure, correspondant à un diamètre de disque maximum.

2. Mécanisme selon la revendication 1, caractérisé en ce que les points mobiles sont constitués par des tenons (12) montés sur des axes (16) et que le mouvement coordonné progressif des axes (16) est orienté et guidé par des moyens (14) prévus sur la plaque de support (10).

3. Mécanisme selon la revendication 2, caractérisé en ce que les moyens d'orientation et de guidage des axes (16) portant les tenons (12) sont constitués par des rainures (14) coopérant avec les axes (16) desdits tenons (12).

4. Mécanisme selon la revendication 1, caractérisé en ce que les points mobiles (12) sont liés à la pièce mobile (30) à l'aide de biellettes (20).

5. Mécanisme selon la revendication 1, caractérisé en ce que la pièce mobile (30) est circulaire et peut être entraînée en rotation limitée par rapport à la plaque de support (10).

6. Mécanisme selon la revendication 5, caractérisé en ce que la rotation de la pièce mobile (30) est guidée par des galets (32) portés par la plaque de support (10).

7. Mécanisme selon la revendication 1, caractérisé en ce que la pièce mobile (30) est soumise à l'action de moyens élastiques (34) qui tendent toujours à ramener les points (12) vers la position intérieure.

8. Mécanisme selon la revendication 1, caractérisé en ce qu'au moins un des points (12) est soumis à l'action de moyens élastiques qui tendent toujours à ramener les points (12) vers la position intérieure (diamètre minimum).

9. Mécanisme selon la revendication 1, caractérisé en ce que la pièce mobile (30) est munie d'une saillie (36) pouvant être actionnée ou pouvant coopérer avec un organe prévu à l'intérieur du tourne-disque de manière à pouvoir imprimer un mouvement complémentaire à la pièce mobile (30) afin d'écarter les points (12) de la périphérie du disque (8) en position opérative.

10. Mécanisme selon la revendication 1, caractérisé en ce que la pièce mobile (30) est munie d'une saillie (36) pouvant être actionnée ou pouvant coopérer avec un organe prévu dans le dispositif de chargement du disque de manière à amener les points (12) dans une position extérieure (disque de diamètre maximum) de manière à permettre la mise en place d'un disque de diamètre quelconque dans un dispositif de chargement tel qu'un dispositif de chargement à tiroir.

FIG. 1

FIG. 2

## FIG. 4

## FIG. 3

## FIG. 6

## FIG. 5